# EUROPÄISCHE PATENTSCHRIFT

(11) **EP 2 371 202 B1**
(45) Veröffentlichungstag und Bekanntmachung des Hinweises auf die Patenterteilung: **06.01.2016**
(21) Anmeldenummer: 11002275.3
(22) Anmeldetag: 19.03.2011
(51) Int. Cl.: A01D 34/90, A01G 3/06, B25F 5/00, B25F 5/02, A01D 34/416, H02K 9/04, H02K 21/22

(54) **Handgeführtes Arbeitsgerät**
Manually operated work device
Appareil de travail manuel

(30) Priorität: 31.03.2010 DE 102010013756
(43) Veröffentlichungstag der Anmeldung: 05.10.2011
(60) Teilanmeldung: 15003159.9
(73) Patentinhaber: Andreas Stihl AG & Co. KG, 71336 Waiblingen (DE)
(72) Erfinder: Müller, Matthias, 73614 Schorndorf-Haubersbronn (DE); Rosskamp, Heiko, Dr., 73099 Adelberg (DE); Liebhard, Gemot, 71332 Waiblingen (DE); Renz, Michael, 70372 Stuttgart (DE)
(74) Vertreter: Reinhardt, Annette

(56) Entgegenhaltungen:
- EP-A1- 0 046 051
- EP-A1- 1 961 528
- WO-A1-2008/098428
- DE-A1-102004 032 789
- DE-U1-202009 016 210
- GB-A- 1 578 906
- US-A- 3 034 376
- US-A- 4 268 964
- US-A- 4 352 243
- US-A1- 2008 042 500

## Beschreibung

Die Erfindung betrifft ein handgeführtes Arbeitsgerät mit einem Werkzeug, das von einem Motor angetrieben ist, mit einem Akku zum Antrieb des Werkzeugs und mit einem Führungsrohr.

Es ist bekannt, bei derartigen handgeführten Arbeitsgeräten, beispielsweise Freischneidern, Hochentastern oder dgl., einen Akkumulator zur Energieversorgung des Elektromotors einzusetzen. Bei bekannten Arbeitsgeräten werden einfache, mechanisch kommutierte Bürstenmotoren eingesetzt. Ein derartiges Arbeitsgerät ist beispielsweise aus der JP 06-062637 A bekannt.

**Aus der** GB 1578 906 **ist ein Freischneider bekannt, dessen Schneidkopf an der dem Gehäuse zugewandten Oberseite Rippen trägt. Die Rippen erzeugen einen Luftstrom durch das Führungsrohr um den Motor. Die Luft tritt durch einen Bereich zwischen Schutz und Schneidkopf aus. Der Luftstrom dient zur Kühlung des Motors.**

Der Erfindung liegt die Aufgabe zugrunde, ein handgeführtes Arbeitsgerät zu schaffen, bei dem die Verschmutzungsneigung des Motorgehäuses gering ist.

Diese Aufgaben **wird** durch ein handgeführtes Arbeitsgerät mit den Merkmalen des Anspruchs 1 gelöst.

Im Betrieb muss verhindert werden, dass Verschmutzungen in das Motorgehäuse eintreten. Gleichzeitig muss ein Austritt für die in das Motorgehäuse angesaugte Kühlluft bereitgestellt werden. Hierzu ist vorgesehen, dass zwischen dem Abtriebsteil und dem Motorgehäuse ein ringförmiger Luftaustrittsspalt gebildet ist, durch den die Kühlluft austritt, und dass mindestens eine Leitschaufel vorgesehen ist, die in den Ringspalt ragt. Die Leitschaufel verringert dadurch den freien Querschnitt des Luftaustrittsspalts.

Der Luftaustrittsspalt ist an einem im Querschnitt etwa U-formigen Ringkanal des Abtriebsteils ausgebildet, in den ein Gehäuserand des Motorgehäuses ragt. Zwischen dem Gehäuserand und dem Ringkanal ist dadurch eine labyrinthförmige Luftführung mit mehreren Umlenkungen gebildet, die das Eindringen von Verschmutzungen in das Motorgehäuse weiter erschwert.

**Vorteilhaft ist die Leitschaufel an dem Abtriebsteil angeordnet. Aufgrund der Rotation des Abtriebsteils können zwischen benachbarten Leitschaufeln am Umfang ausreichend große freie Abschnitte gebildet werden, durch die die Luft austreten kann. Aufgrund der Rotation ist das Eintreten von Fremdmaterial in das Motorgehäuse durch den Abschnitt zwischen benachbarten Leitschaufeln nicht oder nur sehr schwer möglich, so dass das Motorgehäuse im Wesentlichen frei von Verschmutzungen gehalten werden kann. Die durch den Luftaustrittsspalt ausgeblasene Kühlluft bläst Schmutzpartikel vom Luftaustrittsspalt weg und verhindert dadurch den Eintritt der Schmutzpartikel ins Motorgehäuse. Vorteilhaft sind mehrere Leitschaufeln vorgesehen. Die Leitschaufeln sind dabei insbesondere etwa radial ausgerichtet.**

Die Leitschaufel ist insbesondere in dem Ringkanal angeordnet. Der Gehäuserand ragt dabei bis nahe an die Leitschaufel. Der Abstand zwischen Gehäuserand und Leitschaufel ist vorteilhaft so gewählt, dass eine Berührung zwischen Gehäuserand und Leitschaufel im üblichen Betrieb verhindert ist. Der Abstand zwischen Gehäuserand und Leitschaufel ist vorteilhaft unter Berücksichtigung von Fertigungstoleranzen so klein wie möglich gewählt. Der Abstand beträgt insbesondere von etwa 0,5 mm bis etwa 2 mm.

Der Gehäuserand kann sich dabei in axialer Richtung der Motorwelle in den Ringkanal erstrecken. Es kann jedoch auch vorgesehen sein, dass der Ringkanal sich in Umfangsrichtung außerhalb oder innerhalb des Gehäuserands befindet, und dass der Gehäuserand radial zur Längsachse der Motorwelle nach außen oder nach innen ragt. Es kann auch vorgesehen sein, dass der Gehäuserand auch in seitlicher Richtung zur Leitschaufel zu dem Ringkanal nur einen sehr geringen Abstand, beispielsweise einen Abstand von etwa 0,5 mm bis etwa 2 mm, besitzt. Dadurch wird eine noch bessere Abdichtung gegen Verschmutzungen erreicht.

Vorteilhaft besitzt das Arbeitsgerät einen Schneidkopf, der ein rotierendes Werkzeug, beispielsweise ein Messer oder einen Mähfaden, trägt, wobei der Ringkanal an einer drehfest mit dem Schneidkopf verbundenen Scheibe ausgebildet ist. Dadurch ergibt sich eine einfache Gestaltung. Die Scheibe besteht vorteilhaft aus Kunststoff, insbesondere aus glasfaserverstärktem Polyamid. Das Material der Scheibe und des Motorgehäuses sind vorteilhaft so aufeinander abgestimmt, dass bei einer Berührung von Gehäuserand und Motorgehäuse kein Verschweißen der beiden Bauteile miteinander stattfinden kann.

**Ein Ausführungsbeispiel** der Erfindung **wird** im Folgenden anhand der Zeichnung erläutert. Es zeigen:
- Fig. 1: eine perspektivische Ansicht eines Freischneiders,
- Fig. 2: einen Schnitt durch den Freischneider aus Fig. 1,
- Fig. 3: eine Seitenansicht in Richtung des Pfeils III in Fig. 2,
- Fig. 4: eine perspektivische, teilgeschnittene Ansicht des Motorgehäuses und Schneidkopfs des Freischneiders,
- Fig. 5: einen Schnitt durch das Motorgehäuse und den Schneidkopf des Freischneiders,
- Fig. 6: eine vergrößerte Ansicht des Luftaustrittsspalts aus dem Motorgehäuse.

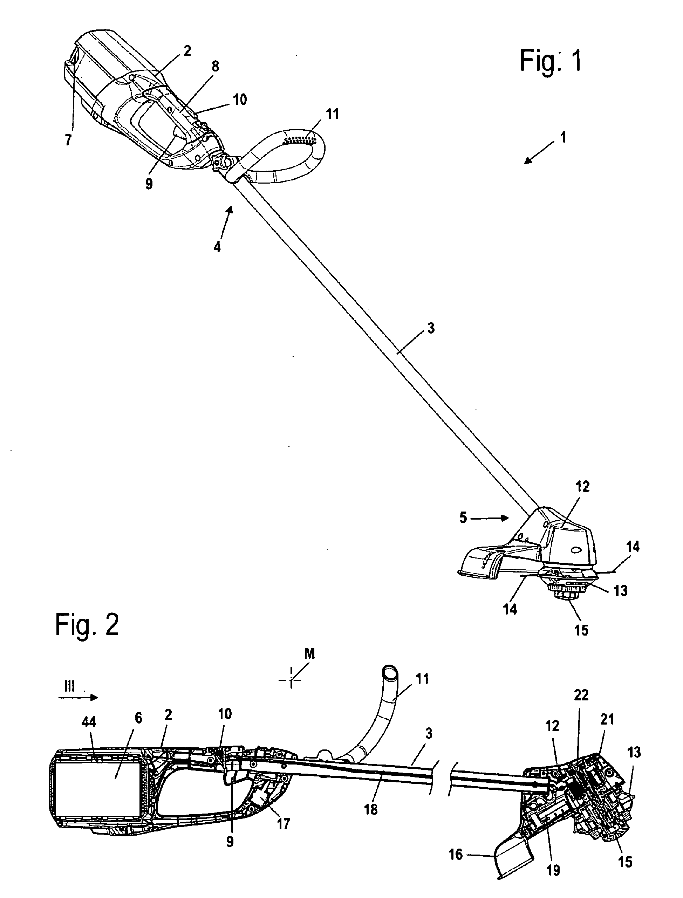

Fig. 1 zeigt als Ausführungsbeispiel für ein handgeführtes Arbeitsgerät einen Freischneider 1. Der Freischneider 1 besitzt ein Akkugehäuse 2, in dem ein in Fig. 2 gezeigter Akku 6 angeordnet ist. Der Akku 6 ist im Akkugehäuse 2 über eine in Fig. 1 gezeigte Akkuverriegelung 7 gehalten. Wie Fig. 1 zeigt, ist am Akkugehäuse 2 ein Handgriff 8 ausgebildet, an dem ein Gashebel 9 und eine Gashebelsperre 10 zur Bedienung des Arbeitsgeräts angeordnet sind. Das Akkugehäuse 2 ist über ein hohles Führungsrohr 3 mit einem Motorgehäuse 12 verbunden. Das Akkugehäuse 2 ist dabei an einem ersten Ende 4 des Führungsrohrs 3 angeordnet und das Motorgehäuse 12 an einem zweiten Ende 5 des Führungsrohrs 3. Am Motorgehäuse 12 ist ein Fadenmähkopf 13 angeordnet, der rotierend angetrieben ist. Der Fadenmähkopf 13 besitzt zwei Mähfäden 14, die als Schneidwerkzeug dienen. Zum Nachstellen von Mähfaden 14 ist an der Unterseite des Fadenmähkopfs 13 ein Betätigungsknopf 15 angeordnet. Benachbart zum Akkugehäuse 2 ist am Führungsrohr 3 ein Bügelgriff 11 festgelegt.

Wie die Schnittdarstellung in Fig. 2 zeigt, ist der Akku 6 in einer im Akkugehäuse 2 gebildeten Aufnahmeöffnung 44 angeordnet. Im Motorgehäuse 12 ist ein Motor 21 angeordnet, der den Fadenmähkopf 13 antreibt. Der Motor 21 besitzt eine Motorwelle 22. Der Motor 21 ist als elektronisch kommutierter, bürstenloser Motor ausgebildet. Der Motor 21 ist ein Außenläufermotor. Zum Betrieb des Motors 21 ist eine Steuerung 19 vorgesehen, die den vom Akku 6 gelieferten Gleichstrom in ein mindestens 3-phasiges Drehfeld umwandelt. Die Steuerung 19 ist benachbart zum Motor 21 im Motorgehäuse 12 angeordnet. Am Motorgehäuse 12 ist ein Schutz 16 befestigt. Wie Fig. 2 zeigt, wirkt der Gashebel 9 auf einen Schalter 17. Der Akku 6 ist mit der Steuerung 19 über eine Verbindungsleitung 18 verbunden, die durch das Führungsrohr 3 geführt ist und über die der Gleichstrom vom Akku 6 übertragen wird.

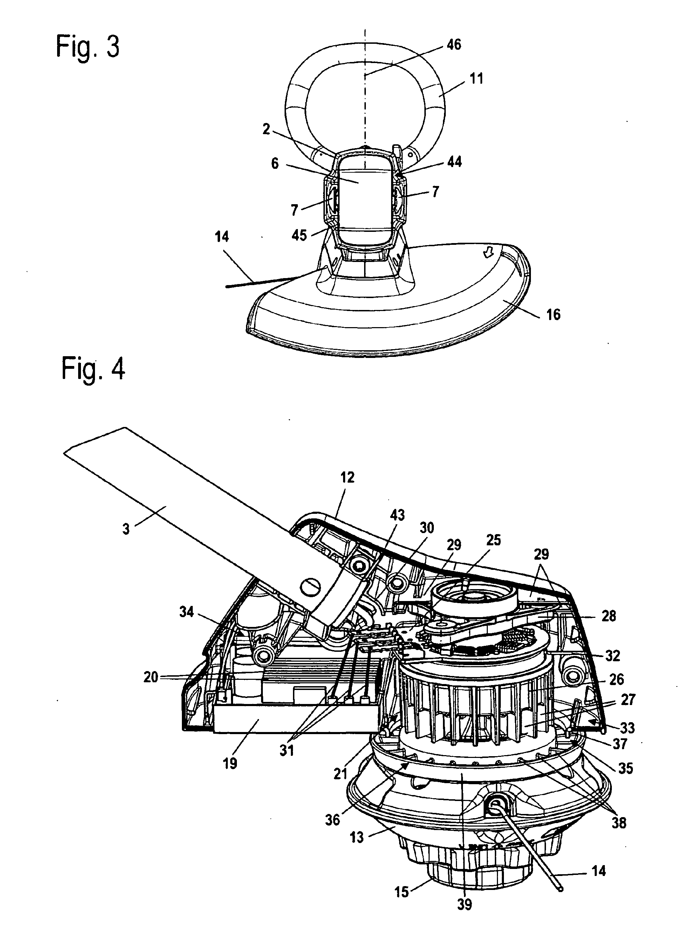

Fig. 3 zeigt die Anordnung des Akkus 6, der insbesondere als Akkupack ausgebildet ist, in der Aufnahmeöffnung 44. Wie Fig. 3 zeigt, ist zwischen dem Akku 6 und der Aufnahmeöffnung 44 ein umlaufender Spalt 45 ausgebildet, über den Kühlluft in das Akkugehäuse 2 und von dort über das Führungsrohr 3 in das Motorgehäuse 12 angesaugt wird. Wie Fig. 3 auch zeigt, ist der Bügelgriff 11 zu einer Spiegelebene 46, die das Führungsrohr 3 in Längsrichtung teilt, symmetrisch. Wie Fig. 2 zeigt, verläuft der Bügelgriff 11 vom Handgriff 8 nach oben und zum Motorgehäuse 12 hin und gebogen. Der Mittelpunkt M des Biegeradius des Bügelgriffs 11 liegt bei Blickrichtung senkrecht zur Spiegelebene 46 oberhalb des Führungsrohrs 3 bzw. des vorderen Bereichs des Akkugehäuses 2 an der dem Akkugehäuse 2 zugewandten Seite des Bügelgriffs 11.

Fig. 4 zeigt den Aufbau des Motorgehäuses 12 im Einzelnen. Das Führungsrohr 3 mündet mit einer Mündungsöffnung 43 ins Motorgehäuse 12. Benachbart zur Mündungsöffnung 43 sind Strömungsleitrippen 30 am Motorgehäuse 12 angeformt, die aus dem Führungsrohr 3 ins Motorgehäuse 12 austretende Kühlluft nach unten lenken. In üblicher Arbeitshaltung des Freischneiders 1, die in Fig. 4 gezeigt ist, ist die Steuerung 19 unterhalb der Mündungsöffnung 43 angeordnet. An der Steuerung 19 sind eine Vielzahl von Kühlrippen 20 ausgebildet, die vorteilhaft metallisch sind, um eine gute Wärmeabfuhr zu ermöglichen. Die Steuerung 19 ist am Boden des Motorgehäuses 12 neben dem Motor 21 angeordnet.

Das Motorgehäuse 12 ist von einer Wand 32 in eine Druckseite 33 und eine Saugseite 34 aufgeteilt. Die Wand 32 ist als Rippe im Motorgehäuse 12 ausgebildet und am Motorgehäuse 12 angeformt. Das Volumen der Saugseite 34 ist deutlich größer als das der Druckseite 33. Auf der Saugseite 34 mündet das Führungsrohr 3. Auf der Saugseite 34 ist außerdem die Steuerung 19 sowie eine Platine 25 des Motors 21 angeordnet. Die Platine 25 ist mit der Steuerung 19 über in Fig. 4 schematisch gezeigte Ansteuerleitungen 31 verbunden. Der Motor 21 besitzt einen Befestigungsflansch 28, der ebenfalls auf der Saugseite 34 angeordnet ist. Der Befestigungsflansch 28 ist zwischen parallel zueinander verlaufenden, benachbarten Gehäuserippen 29 des Motorgehäuses 12 eingeschoben und zwischen diesen gehalten. Der Befestigungsflansch 28 ist nicht am Motorgehäuse 12 angeschraubt. Das Motorgehäuse 12 besteht aus Kunststoff, insbesondere aus ABS. Dadurch sind die Gehäuserippen 29 geringfügig elastisch. Es ergibt sich eine elastische Lagerung des Motors 21. Der Befestigungsflansch 28 ist zwischen den Gehäuserippen 29 in axialer Richtung der Motorwelle 22 und in Umfangsrichtung abgestützt.

Der Motor 21 ist als Außenläufermotor ausgebildet. Der Motor 21 besitzt einen Rotor 26, der auf der Druckseite 33 angeordnet ist und der Lüfterflügel 27 trägt, die die Kühlluft aus dem Akkugehäuse 2 ansaugen.

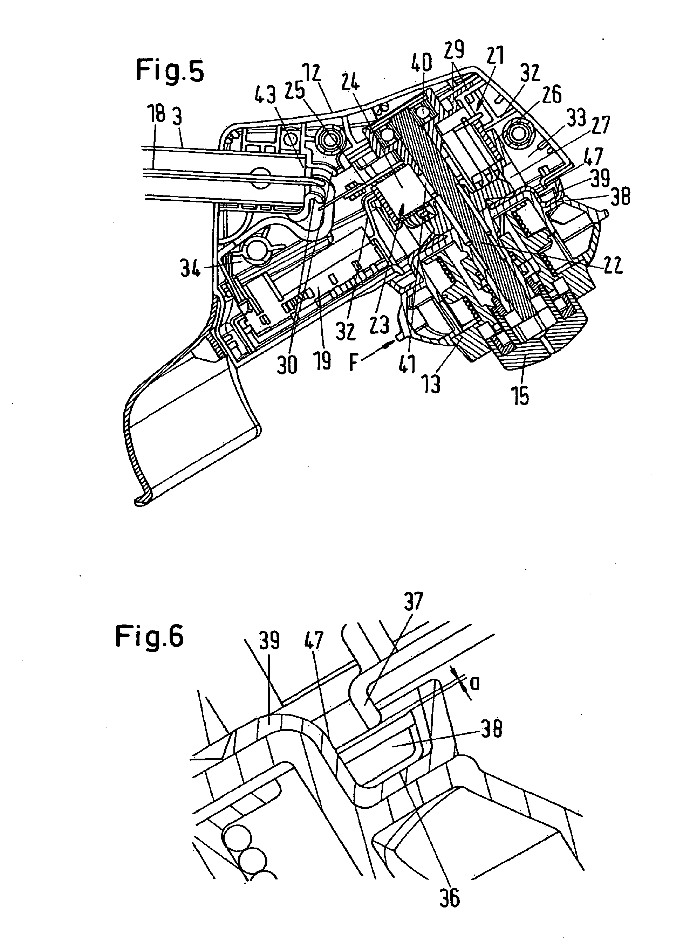

Das Motorgehäuse 12 besitzt einen Gehäuserand 37, der eine Durchtrittsöffnung für den Rotor 26 und die mit dem Rotor 26 drehfest verbundenen Bauteile begrenzt. Zwischen dem Rotor 26 und dem Fadenmähkopf 13 ist eine Scheibe 39 angeordnet, die ebenfalls drehfest mit dem Rotor 26 und dem Mähkopf 13 verbunden ist. Die Scheibe 39 besteht aus Kunststoff, insbesondere aus glasfaserverstärktem Polyamid. Die Scheibe 39 bildet einen Ringkanal 36, der auch in Fig. 6 vergrößert gezeigt ist. In dem Ringkanal 36 sind eine Vielzahl von Leitschaufeln 38 angeordnet, die in Umfangsrichtung zueinander beabstandet angeordnet sind und die jeweils radial ausgerichtet sind. Der Gehäuserand 37 erstreckt sich in axialer Richtung der Motorwelle 22 und ragt bis nahe an die Oberkante der Leitschaufeln 38. Zwischen den Leitschaufeln 38 und dem Gehäuserand 37 ist ein Abstand a gebildet, der in Fig. 6 gezeigt ist und der vorteilhaft so gering wie möglich gewählt wird. Der Abstand a ist so gewählt, dass bei den auftretenden Fertigungstoleranzen im üblichen Betrieb kein Kontakt zwischen dem Gehäuserand 37 und den Leitschaufeln 38 besteht. Der Abstand a beträgt vorteilhaft von etwa 0,5 mm bis etwa 2 mm. Aufgrund der Umlenkung der austretenden Kühlluft im Ringkanal 36 wird eine labyrinthartige Abdichtung des Luftaustrittsspalts 35 erreicht.

Wie Fig. 4 zeigt, umfasst die Druckseite 33 im Wesentlichen den Raum, der den Rotor 26 umgibt.

Fig. 5 zeigt den Aufbau des Motors 21 und dessen Lagerung im Einzelnen. Die Motorwelle 22 ist mit einem ersten Lager 40 im Bereich des Befestigungsflanschs 28 gelagert. Ein zweites Lager 41 ist in einem mittigen Bereich der Motorwelle 22 im Inneren des Stators 23 angeordnet. Dadurch ist die Motorwelle 22 nur in ihrem oberen Bereich gelagert. Der Stator 23 des Motors 21 umfasst mindestens eine Erregerspule 24, die ein Magnetfeld erzeugt. Der Rotor 26 besitzt radial außerhalb des Stators 23 Magnete, auf die das von mindestens einer Erregerspule 24 erzeugte Magnetfeld wirkt und so den Rotor 26 in Rotation versetzt. Die Motorwelle 22 rotiert im Betrieb mit dem Rotor 26 und ist drehfest mit dem Mähkopf 13 verbunden.

Aufgrund der elastischen Lagerung des Motors 21 zwischen den Gehäuserippen 29 kann der Motor beim Einwirken einer Querkraft F am Fadenmähkopf 13 verkippen. Um diese Kippbewegung zu begrenzen, ist an der Scheibe 39 ein Anschlag 47 vorgesehen, der mit dem Gehäuserand 37 (Figuren 4 und 6) zusammenwirkt und so die Kippbewegung des Motors 21 und des Mähkopfs 13 begrenzt. Der Winkel, um den die Motorwelle 22 verkippen kann, beträgt vorteilhaft von etwa 1° bis etwa 5°.

Um die labyrinthartige Abdichtung am Luftaustrittsspalt 35 noch zu verbessern, kann vorgesehen sein, dass auch der Abstand zwischen dem Gehäuserand 37 und dem Ringkanal 36 in radialer Richtung sehr gering gewählt wird, beispielsweise entsprechend dem Abstand a. Dadurch kann die mögliche Kippbewegung des Motors begrenzt werden. Es kann auch vorgesehen sein, dass der Ringkanal 36 radial nach außen oder radial nach innen öffnet und sich der Gehäuserand 37 radial nach innen bzw. radial nach außen erstreckt. In diesem Fall kann vorgesehen sein, dass der Gehäuserand 37 mit den Leitschaufeln 38 einen Anschlag für die Kippbewegung des Motors 21 bildet.

Die Anordnung der Steuerung eines elektronisch kommutierten, bürstenlosen Motors direkt benachbart zum Motor am zweiten Ende 5 des Führungsrohrs 3, die elastische Lagerung des Motors 21 zwischen Gehäuserippen 29 und die Gestaltung des Luftaustrittsspalts mit Leitschaufeln 38 stellen voneinander unabhängige, eigenständige erfinderische Gedanken dar, die sich jedoch vorteilhaft ergänzen.

## Patentansprüche

1. Handgeführtes Arbeitsgerät mit mindestens einem Werkzeug, das von einem Motor (21) angetrieben ist, wobei das Arbeitsgerät einen Akku (6) zum Antrieb des Werkzeugs und ein Führungsrohr (3) besitzt, wobei an einem ersten Ende (4) des Führungsrohrs (3) der Akku (6) und an einem zweiten Ende (5) ein Motorgehäuse (12) und das Werkzeug angeordnet sind, wobei am Motorgehäuse (12) ein rotierendes Abtriebsteil angeordnet ist, das das Werkzeug trägt und das von dem Motor (21) rotierend angetrieben ist, wobei Kühlluft über das Führungsrohr (3) in das Motorgehäuse (12) angesaugt wird,
**dadurch gekennzeichnet, dass** zwischen dem Abtriebsteil und dem Motorgehäuse (12) ein ringförmiger Luftaustrittsspalt (35) gebildet ist, durch den die Kühlluft austritt, dass mindestens eine Leitschaufel (38) vorgesehen ist, die in den Ringspalt (35) ragt, **und dass der Luftaustrittsspalt (35) an einem im Querschnitt etwa U-förmigen Ringkanal (36) des Abtriebsteils ausgebildet ist, in den ein Gehäuserand (37) des Motorgehäuses (12) ragt.**

2. Arbeitsgerät nach Anspruch 1,
**dadurch gekennzeichnet, dass** die Leitschaufel (38) am Abtriebsteil angeordnet ist.

3. Arbeitsgerät nach Anspruch 1 oder 2,
**dadurch gekennzeichnet, dass** mehrere, insbesondere etwa radial ausgerichtete Leitschaufeln (38) vorgesehen sind.

4. Arbeitsgerät nach **einem der Ansprüche 1 bis 3,**
**dadurch gekennzeichnet, dass** die Leitschaufel (38) in dem Ringkanal (36) angeordnet ist, und dass der Abstand (a) zwischen dem Gehäuserand (37) und der Leitschaufel (38) von etwa 0,5 mm bis etwa 2 mm beträgt.

5. Arbeitsgerät nach **einem der Ansprüche 1 bis 4,**
**dadurch gekennzeichnet, dass** das Arbeitsgerät einen Schneidkopf besitzt, der ein rotierendes Werkzeug trägt, wobei der Ringkanal (36) an einer drehfest mit dem Schneidkopf verbundenen Scheibe (39) ausgebildet ist.

## Claims

1. Hand-held work device with at least one tool which is driven by a motor (21), wherein the work device has a battery (6) to drive the tool and a guide tube (3), wherein the battery (6) is arranged at a first end (4) of the guide tube (3), and a motor housing (12) and the tool are arranged at a second end (5), wherein a rotating driven part is arranged on the motor housing (12), which carries the tool and which is driven in rotation by the motor (21), wherein cooling air is sucked via the guide tube (3) into the motor housing (12),
**characterised in that** an annular air outlet gap (35) is formed between the driven part and the motor housing (12), through which the cooling air exits, at least one guide vane (38) is provided which projects into the annular gap (35), and the air outlet gap (35) is formed on an annular channel (36), approximately U-shaped in cross-section, of the driven part, into which a housing edge (37) of the motor housing (12) projects.

2. Work device according to claim 1,
**characterised in that** the guide vane (38) is arranged on the driven part.

3. Work device according to claim 1 or 2,
**characterised in that** a plurality of, in particular approximately radially orientated, guide vanes (38) are provided.

4. Work device according to one of claims 1 to 3,
**characterised in that** the guide vane (38) is arranged in the annular channel and the distance (a) between the housing edge (37) and the guide vane (38) is from approximately 0.5 mm to approximately 2 mm.

5. Work device according to one of claims 1 to 4,
**characterised in that** the work device has a cutting head which carries a rotating tool, wherein the annular channel (36) is formed on a disc (39) connected rotationally securely to the cutting head.

## Revendications

1. Appareil de travail manuel avec au moins un outil qui est entraîné par un moteur (21), étant précisé que l'appareil comporte un accumulateur (6) pour entraîner l'outil, et un tube de guidage (3), que l'accumulateur (6) est disposé à une première extrémité (4) du tube de guidage (3) tandis qu'un boîtier de moteur (12) et l'outil sont disposés à une seconde extrémité (5), qu'il est prévu sur le boîtier de moteur (12) une pièce de sortie rotative qui porte l'outil et qui est entraînée en rotation par le moteur (21), et que de l'air de refroidissement est amené par aspiration dans le boîtier de moteur (12) par l'intermédiaire du tube de guidage (3),
**caractérisé en ce qu'**un interstice de sortie d'air annulaire (35) par lequel l'air de refroidissement sort est formé entre la pièce de sortie et le boîtier de moteur (12), **en ce qu'**il est prévu au moins une aube directrice (38) qui dépasse dans l'interstice annulaire (35), et **en ce que** l'interstice de sortie d'air (35) est formé sur un conduit annulaire (36) à section transversale à peu près en U de la pièce de sortie dans lequel dépasse un bord (37) du boîtier de moteur (12).

2. Appareil selon la revendication 1,
**caractérisé en ce que** l'aube directrice (38) est disposée sur la pièce de sortie.

3. Appareil selon la revendication 1 ou 2,
**caractérisé en ce qu'**il est prévu plusieurs aubes directrices (38), orientées en particulier à peu près radialement.

4. Appareil selon l'une des revendications 1 à 3,
**caractérisé en ce que** l'aube directrice (38) est disposée dans le conduit annulaire (36), et **en ce que** la distance (a) entre le bord de boîtier (37) et l'aube directrice (38) est d'environ 0,5 mm à environ 2 mm.

5. Appareil selon l'une des revendications 1 à 4,
**caractérisé en ce que** l'appareil comporte une tête de coupe qui porte un outil rotatif, étant précisé que le conduit annulaire (36) est formé sur une plaque (39) reliée, fixe en rotation, à la tête de coupe.
